Europäisches Patentamt

European Patent Office

Office européen des brevets

(19)

(11) Veröffentlichungsnummer : **0 087 557**
**B1**

(12) **EUROPÄISCHE PATENTSCHRIFT**

(45) Veröffentlichungstag der Patentschrift :
**15.05.85**

(21) Anmeldenummer : **83100195.3**

(22) Anmeldetag : **12.01.83**

(51) Int. Cl.⁴ : **F 16 L 15/00, E 21 B 17/06**

(54) **Rohrverbindung für Metallrohre.**

(30) Priorität : **27.02.82 DE 3207180**
**27.02.82 DE 3207181**
**27.02.82 DE 3207183**

(43) Veröffentlichungstag der Anmeldung :
**07.09.83 Patentblatt 83/36**

(45) Bekanntmachung des Hinweises auf die Patenterteilung : **15.05.85 Patentblatt 85/20**

(84) Benannte Vertragsstaaten :
**AT FR GB IT NL SE**

(56) Entgegenhaltungen :
**DE-A- 2 446 783**
**GB-A- 1 515 357**
**GB-A- 1 587 836**

(73) Patentinhaber : **MANNESMANN Aktiengesellschaft**
**Mannesmannufer 2**
**D-4000 Düsseldorf 1 (DE)**

(72) Erfinder : **Heilmann, Wolfgang**
**Veilchenweg 2**
**D-4018 Langenfeld (DE)**
Erfinder : **Lenze, Friedrich, Dr.-Ing.**
**Lerchenweg 9A**
**D-4030 Ratingen (DE)**
Erfinder : **Missaire, Gerhard, Ing.(grad.)**
**Bröleck 25b**
**D-5207 Ruppichteroth (DE)**
Erfinder : **Winter, Friedrich**
**A.d. Scheinsfeld 27**
**D-4000 Düsseldorf (DE)**

(74) Vertreter : **Andrejewski, Walter et al**
**Patentanwälte Andrejewski, Honke & Partner Postfach 10 02 54 Theaterplatz 3**
**D-4300 Essen 1 (DE)**

Jouve, 18, rue St-Denis, 75001 Paris, France

## Beschreibung

Die Erfindung betrifft eine Rohrverbindung für Metallrohre, insbesondere Ölfeldrohre, — mit Bolzenrohrelement und Muffenrohrelement, die mit konischem Gewinde verschraubbar sind und eine einschraubbegrenzende Stoßfläche im Muffenrohrelement sowie eine entsprechende Stirnfläche am Bolzenrohrelement aufweisen, wobei das Muffenrohrelement in einem gewindefreien, an seine Stoßfläche anschließenden Bereich einen angeformten Dichtungskegel und das Bolzenrohrelement in einem gewindefreien, an seine Stirnfläche anschließenden Bereich ein Gegendichtungselement aufweist. Dichtungskegel und Gegendichtungselement bilden die sogenannte Umfangsdichtung. Zum Zwecke der Verbindung von Bolzenrohrelement und Muffenrohrelement erfolgt eine Kraftverschraubung mit definiertem Verschraubungsdrehmoment. Insbesondere im Ölfeld, wo Rohrschüsse von 6 m Länge und mehr zu Rohrsträngen verschraubt werden, die mehrere Kilometer Länge aufweisen und mit unterschiedlicher Funktion im Bohrloch arbeiten, haben die Rohrverbindungen erhebliche Beanspruchungen aufzunehmen. Außerdem werden erhebliche Anforderungen an die Dichtheit, auch nach mehrfachem Lösen und Wiederverschrauben gestellt. Im allgemeinen muß darüber hinaus der Strömungskanal im Innern des Rohrstranges im Bereich der gegeneinander verschraubten Stirnflächen und Stoßflächen aus hydrodynamischen Gründen stufenfrei sein.

Bei den bekannten Rohrverbindungen dieser Art (FR-A-13 60 257, Fig. 5 und 6) sind die Stoßfläche und die Stirnfläche frei von Dichtungsausbildungen für eine definierte Abdichtung Metall auf Metall. Die Dichtwirkung wird hauptsächlich durch die Umfangsdichtung, d. h. durch die Wechselwirkung des Dichtungskegels im Muffenrohrelement mit dem zugeordneten Gegendichtungselement am Bolzenrohrelement, bestimmt. Sie ist verbesserungsbedürftig. Zwar ist bei einer anderen Ausführungsform (FR-A-13 60 257, Fig. 1 bis 4) an der Stoßfläche des Muffenrohrelementes eine Dichtungsausbildung vorgesehen, die aus einer am größeren Rand in die Stoßfläche eingebrachten, tiefen und breiten umlaufenden Nut besteht, in die ein loser Dichtring aus Polytetrafluoräthylen oder dergleichen eingelegt ist, der über die Stoßfläche vorsteht. Der dem Dichtungsring gegenüberliegende Gegenbereich an der Stirnfläche des Bolzenrohrelementes ist glatt. Der lose Dichtring stört, insbesondere wenn er nicht genau in der umlaufenden Nut liegt. Letzteres beeinträchtigt unter Umständen auch die Dichtwirkung der Umfangsdichtung zwischen Dichtungskegel im Muffenrohrelement und zugeordnetem Gegendichtungselement am Bolzenrohr. Um Abhilfe zu schaffen, ist vorgeschlagen worden, daß die Stoßfläche und die Stirnfläche zur Verbesserung der Umfangsdichtung herangezogen werden (FR-A-14 89 013).

Hier verläuft die Stoßfläche flachkonisch zurückspringend und die Stirnfläche am Bolzenrohrelement ist komplementär ausgeführt. Stoßfläche und Stirnfläche sind frei von irgendwelchen Dichtungsausbildungen. Die Verbesserung der Dichtwirkung soll durch Aufspreizen des Bolzenrohrelementes an dem flachkonisch zurückspringenden Stoßflächenbereich des Muffenrohrelementes erzeugt werden, wobei dieses Aufspreizen das Gegendichtungselement am Bolzenrohrelement gegen den zugeordneten Dichtungskegel preßt. Das bewirkt häufig erhebliche plastische Verformungen der äusseren Kante des Bolzenrohrelementes. Die Aufspreizung wird durch die plastische Verformung bei weggedrücktem Material unkontrolliert, was der Einstellung einer definierten Dichtkraft durch das Verschraubungsdrehmoment abträglich ist.

Der Erfindung liegt die Aufgabe zugrunde, eine gattungsgemäße Rohrverbindung so weiter auszubilden, daß zwischen Stoßfläche und Stirnfläche eine sichere Abdichtung erreichbar ist, und zwar ohne Beeinträchtigung der Umfangsdichtung zwischen Dichtungskegel im Muffenrohrelement und Gegendichtungselement am Bolzenrohr, gleichgültig, wie das Gegendichtungselement im eizelnen gestaltet ist.

Zur Lösung dieser Aufgabe lehrt die Erfindung, daß die Stoßfläche des Muffenrohrelementes zumindest eine vorstehende und umlaufende Dichtrippe aufweist, die zumindest eine zur Rohrachse parallele Rippenflanke sowie eine ebene Rippenkopffläche besitzt, daß entsprechend die Stirnfläche des Bolzenrohrelementes mit zumindest einer Dichtnut versehen ist, die eine der parallelen Rippenflanke der Dichtrippe zugeordnete Nutflanke sowie eine der Rippenkopffläche zugeordnete Nutengrundfläche aufweist, und daß die Rippenkopffläche sowie die Nutengrundfläche im zusammengeschraubten Zustand aufeinandergepreßt sind, und die zur Rohrachse parallele Rippenflanke sowie die zugeordnete Nutenflanke zumindest mit Dichtungsspalt einander gegenüberliegend angeordnet sind. — Die Erfindung geht von der Erkenntnis aus, daß bei einer gattungsgemäßen Rohrverbindung an der Stoßfläche im Muffenrohrelement und der Stirnfläche am Bolzenrohrelement eine zusätzliche definierte Abdichtung erzielbar ist, die die Umfangsdichtung nicht beeinträchtigt, und zwar durch Anordnung von zumindest einer Dichtrippe und einer Dichtnut, die bei der beschriebenen Anordnung und Ausbildung in besonderer Weise wechselwirken : Einerseits erfolgt eine Kompressionsdichtung dadurch, daß die Rippenkopffläche sowie die Nutengrundfläche im zusammengeschraubten Zustand aufeinandergepreßt sind. Das bewirkt eine definierte Dichtung Metall auf Metall im Nutengrund. — Andererseits erfolgt eine Spaltdichtung dadurch, daß eine zur Rohrachse parallele Rippenflanke und die zugeordnete Nutenflanke zumindest mit Dichtungsspalt einander gegenüberliegend angeordnet sind. Sie funktionieren wie eine Spaltdichtung oder auch wie eine Labyrinthdichtung. Rippenflanke und Nutenflanke können dabei auch paß aufeinandersitzen oder leicht aufeinandergepreßt sein. Die Wirkung der für die Einschraubbegrenzung eingerichteten Flächen, mit einer Flächenpressung, die störende plastische Deformationen nicht bewirkt, bleibt erhalten. Die einschraubbegrenzenden Flächen sind entsprechend ausgelegt. Das hat zur Folge, daß auch der Dichtungskegel im Muffenrohrelement und das Gegendichtungselement am Bolzenrohrelement definiert miteinander wechselwirken, wie es für die Umfangsdichtung konstruktiv vorgegeben ist und wie es für ein Gegendichtungselement in Form eines Dichtungsballens an sich bekannt ist (DE-A-24 46 783). Insoweit unterscheidet sich die Erfindung von einer anderen Rohrverbindung (US-A-38 70 351, Fig. 7), bei der die Stoßfläche in eine im Radialschnitt konkave Nut, die Stirnfläche mit unterschiedlichem Krümmungsradius konvex gestaltet sind und durch hohe Flächenpressung unter dem Einfluß des Verschraubungsdrehmomentes eine Liniendichtung erzeugt werden soll. Das führt zwangsläufig zu ringförmig umlaufenden, plastisch verformten Einpressungen an der Stoßfläche bzw. an der Stirnfläche, was die Einschraubbegrenzung undefiniert macht und bei mehrfachem Lösen und Wiederverschrauben die Dichtwirkung, auch der Umfangsdichtung, unbestimmt macht.

Im einzelnen läßt sich die Lehre der Erfindung auf verschiedene Weise verwirklichen, und zwar sowohl bei Ausführungsformen mit einer einzigen Dichtrippe und einer einzigen Dichtnut, als auch bei Ausführungsformen mit mehreren Dichtrippen und mehreren Dichtnuten.

Eine bevorzugte Ausführungsform der Erfindung mit einer einzigen Dichtrippe und einer einzigen Dichtnut (die beide auch die Einschraubbegrenzung bewirken oder zu dieser wesentlich beitragen) ist dadurch gekennzeichnet, daß die Dichtrippe des Muffenrohrelementes rohrinnenseitig angeordnet und zugleich als Einschraubbegrenzungsbund ausgebildet ist, der auf seiner von der Rohrachse wegweisenden Außenseite die zur Rohrachse parallele Rippenflanke sowie eine zur Rohrachse orthogonale Rippenkopffläche aufweist, und daß die Rippenkopffläche als Anschlagfläche sowie die entsprechende Nutengrundfläche des Bolzenrohrelementes als Anschlaggegenfläche für die Einschraubbegrenzung ausgelegt sind. Die als Einschraubbegrenzungsbund eingesetzte Dichtrippe sowie die Dichtnut, die die Dichtrippe aufnimmt, können im zusammengeschraubten Zustand rohrinnenseitig mit der Rohrinnenwand glatt abschließen. An der gegenüber der Stoßfläche vorspringenden Dichtrippe kann rohrinnenseitig eine Abschlußringfläche anschließen, die radial etwa mit der Stoßfläche fluchtet, wobei die Dichtnut als eine solche Nut ausgeführt ist, in die die Dichtrippe mit Radialspiel einfaßt, wobei ferner rohrinnenseitig eine Abschlußringgegenfläche anschließt. Vorzugsweise ist bei dieser Ausführungsform der Erfindung mit einer einzigen Dichtrippe und einer einzigen Dichtnut die Anordnung so getroffen, daß die an die Dichtrippe des Muffenrohrelementes rohraußenseitig angeschlossene Stoßfläche orthogonal zur Rohrachse angeordnet ist, daß an die entsprechende Stirnfläche des Bolzenrohrelementes als Gegendichtungselement ein Dichtungsballen angeschlossen ist, der im eingeschraubten Zustand an den Dichtungskegel angepreßt ist, und daß im eingeschraubten Zustand die Stirnfläche des Bolzenrohrelementes die Stoßfläche im Muffenrohrelement lediglich berührt.

Eine bevorzugte Ausführungsform der Erfindung mit mehreren Dichtrippen und mehreren Dichtnuten (die wie eine Labyrinthdichtung zusammenwirken) ist dadurch gekennzeichnet, daß die aus der Stoßfläche des Muffenrohrelementes vorstehenden Dichtrippen im Radialschnitt trapezförmigen Querschnitt aufweisen und konzentrisch zur Rohrachse sowie zueinander umlaufen, und daß im zusammengeschraubten Zustand die Dichtrippen in die Dichtnuten der Stirnfläche des Bolzenrohrelementes, bei einschraub begrenzender Anlage der Stoßfläche an der Stirnfläche, mit dichtender Anlage der zur Rohrachse parallelen Rippenflanke an der entsprechenden Nutenflanke einfassen sowie die Rippenkopfflächen in den Nutengrundflächen dichtend anliegen. Hier können die Dichtrippen und die Dichtnuten im zusammengeschraubten Zustand auch mit ihren, den zur Rohrachse parallelen Flanken gegenüberliegenden Flanken gegeneinandergepreßt sein. Vorzugsweise ist bei der Ausführungsform mit mehreren Dichtrippen die Anordnung so getroffen, daß das Muffenrohrelement rohraußenseitig hinter der letzten Dichtrippe einen äußeren Stoßflächenbereich aufweist, der gegenüber der Rippenkopffläche zurückspringt und an den der Dichtungskegel anschließt, und daß das Bolzenrohrelement rohraußenseitg hinter der letzten Dichtnut einen gegenüber dem Nutengrund vorspringenden Stirnflächenbereich aufweist, an den rohraußenseitig ein als Dichtballen ausgeführtes Dichtungsgegenelement anschließt, welches dem Dichtungskegel zugeordnet ist, wobei die Stoßfläche und die Stirnfläche orthogonal zur Rohrachse verlaufen.

Bei der Ausführungsform mit mehreren Dichtrippen und Dichtnuten kann auch von einer ursprünglich flachkonisch zurückspringenden Stoßfläche mit entsprechender Stirnfläche ausgegangen werden. In diesem Zusammenhang ist eine Ausführungsform der Erfindung dadurch gekennzeichnet, daß die Rippenstirnflächen der Dichtrippen an der Stoßfläche des Muffenrohrelementes sowie die Nutengrundflächen in den Dichtnuten in der Stirnfläche des Bolzenrohrelementes orthogonal zur Rohrachse verlaufen, daß die Stoßfläche im Muffenrohrelement nach außen flachkonisch zurückspringt sowie die Stirnfläche am Bolzenrohrelement entsprechend nach außen vorspringend angeordnet ist. Es versteht sich, daß hier die Stoßfläche gleichsam in mehrere Stoßflächenbereiche aufgelöst ist, zwischen denen sich die Dichtrippen befinden, — und daß die Stirnfläche entsprechend eingerichtet ist. Bei dieser Ausführungsform kann das Muffenrohrelement rohraußenseitig hinter der letzten Dichtrippe einen äußeren Stoßflächenbereich aufweisen, der gegenüber der Rippenkopffläche flachkonisch zurückspringt und an den der Dichtungskegel anschließt, wobei das Bolzenrohrelement rohraußenseitig hinter der letzten Dichtnut einen gegenüber dem Nutengrund konisch vorspringenden Stirnflächenbereich besitzt, an den rohraußenseitig ein ebenfalls als Dichtungskegel angeformtes Dichtungselement anschließt. Die Rippenstirnflächen an den Dichtrippen der Stoßfläche des Muffenrohrelementes sowie die Nutengrundfläche in den Dichtnuten in der Stirnfläche des Bolzenrohrelementes können auch entsprechend der flachkonisch zurückspringenden Stoßfläche, ebenso wie die Stirnfläche, schräg zur Rohrachse verlaufen. Im Rahmen der Erfindung liegt es, auch bei dieser Ausführungsform der Erfindung, bei der die Stoßfläche im Muffenrohrelement nach außen flachkonisch und die Stirnfläche am Bolzenrohrelement entsprechend vorspringend angeordnet ist, am Bolzenrohrelement als Dichtungsgegenelement einen Dichtungsballen vorzusehen.

Im folgenden wird die Erfindung anhand einer lediglich ein Ausführungsbeispiel darstellenden Zeichnung ausführlicher erläutert. Es zeigen in schematischer Darstellung :

Figur 1 einen Axialschnitt durch eine erfindungsgemäße Rohrverbindung im zusammengeschraubten Zustand,

Figur 2 den vergrößerten Ausschnitt A aus dem Gegenstand nach Fig. 1,

Figur 3 den Gegenstand nach Fig. 2 vor dem vollständigen Zusammenschrauben,

Figur 4 entsprechend der Fig. 2 eine andere Ausführungsform einer erfindungsgemäßen Rohrverbindung,

Figur 5 einen Axialschnitt durch eine andere erfindungsgemäße Rohrverbindung im zusammengeschraubten Zustand,

Figur 6 den vergrößerten Ausschnitt C aus dem Gegenstand nach Fig. 5,

Figur 7 den Gegenstand nach Fig. 6 vor dem vollständigen Zusammenschrauben,

Figur 8 eine weitere Ausführungsform einer erfindungsgemäßen Rohrverbindung, ausschnittsweise,

Figur 9 den Gegenstand nach Fig. 8 vor dem Zusammenschrauben und

Figur 10 den vergrößerten Ausschnitt einer nochmals anderen Ausführungsform.

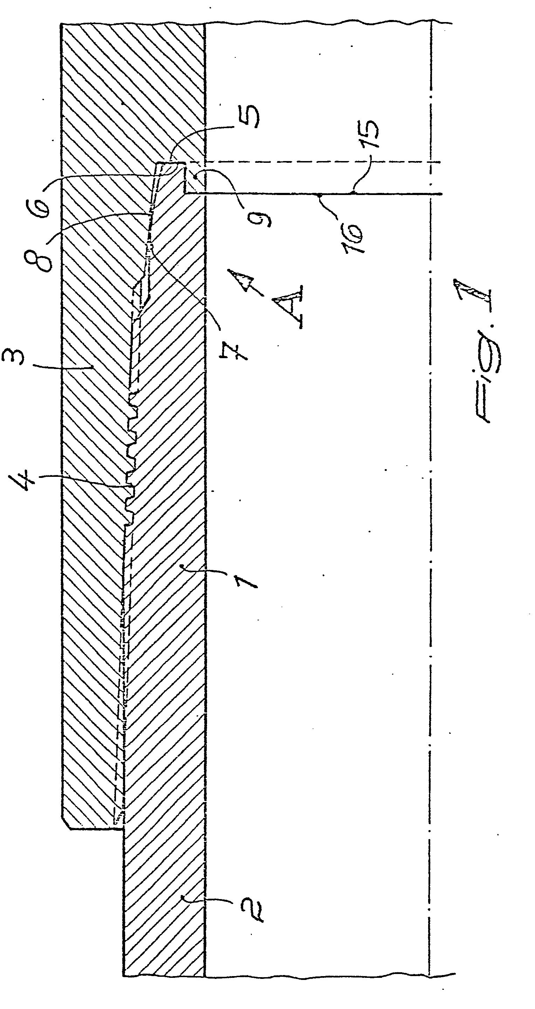

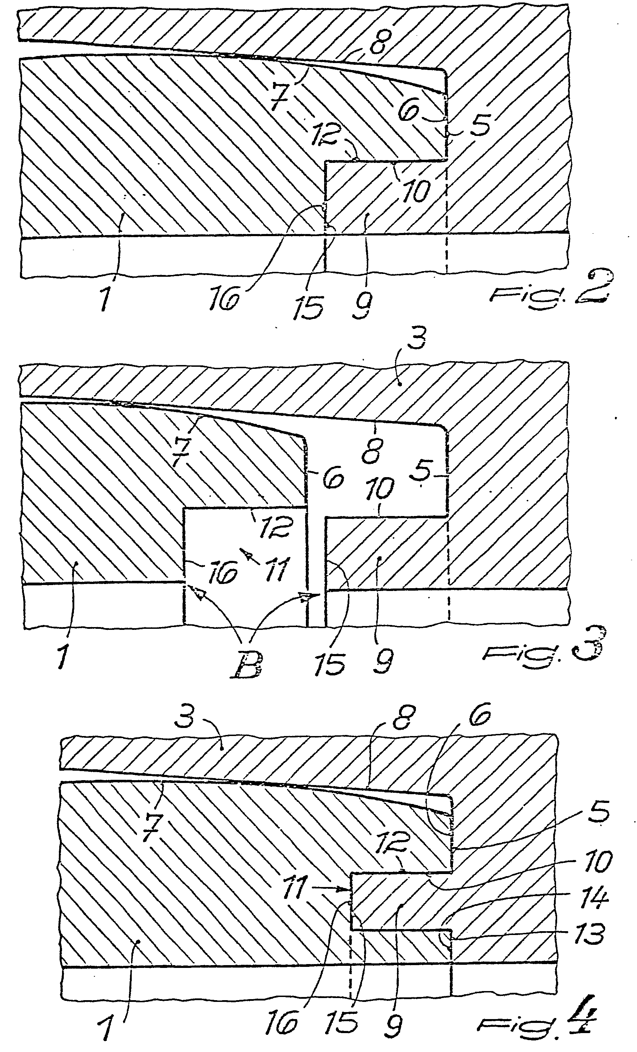

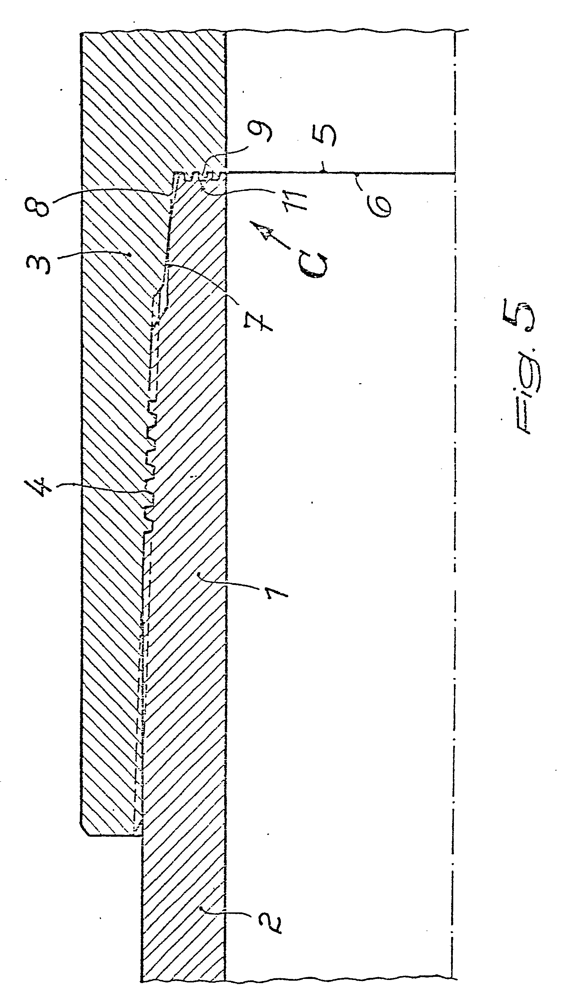

Die in den Figuren 1 bis 4 dargestellte Rohrverbindung für Metallrohre ist insbesondere für Ölfeldrohre bestimmt. In Fig. 1 erkennt man zunächst ein Bolzenrohrelement 1, an welches sich nach links hin ein Rohrschuß 2 anschließen mag, der an seinem linken Ende ein Muffenrohrelelement 3 trägt, wie es in Fig. 1 rechts dargestellt ist. Das Muffenrohrelement 3 kann auch ein selbständiges Bauteil sein. Jedenfalls sind sie mit konischem Gewinde 4 verschraubbar. Im Muffenrohrelement 3 befindet sich eine senkrecht zur Rohrachse angeordnete Stoßfläche 5, während das Bolzenrohrelement 1 eine entsprechend senkrechte Stirnfläche 6 aufweist. Das Bolzenrohrelement 1 ist in einem gewindefreien, an die Stirnfläche 6 anschließenden Abschnitt mit einem angeformten Dichtungsballen 7 als Gegendichtungselement versehen. Das Muffenrohrelement 3 trägt in einem gewindefreien, an die Stoßfläche 5 anschließenden Bereich einen entsprechenden, angeformten Dichtungskegel 8, der im Axialschnitt auch leicht bogenförmig geformt sein könnte. An die Stoßfläche 5 schließt rohrinnenseitig eine Dichtrippe 9 an, die auf ihrer von der Rohrachse wegweisenden Außenseite eine zur Rohrachse parallele Rippenflanke 10 aufweist. Die Stirnfläche 6 ist mit einer Dichtnut 11 versehen, die auf ihrer zur Rohrachse weisenden Seite eine entsprechend zur Rohrachse parallele Nutflanke 12 besitzt. Die Dichtrippe 9 besitzt eine radiale Dicke, die etwa ein Drittel bis die Hälfte der Wanddicke des Bolzenrohrelementes 1 im Bereich des Dichtungsballens 7 ausmacht. Im übrigen weist die Dichtrippe 9 eine axiale Länge auf, die etwa ihrer Dicke entspricht. Die Dichtrippe 9 besitzt eine zur Rohrachsesenkrechte Rippenkopffläche 15 als Anschlagfläche. Die Dichtnut 11 besitzt eine entsprechende Nutengrundfläche 16 als Anschlaggegenfläche. Im zusammengeschraubten Zustand sitzen die Flächen 15, 16 preßeinschraubbegrenzend aufeinander. Im Ausführungsbeispiel der Fig. 1 bis 3 ist Anordnung so getroffen, daß die Dichtrippe 9 sowie die Dichtnut 11 rohrinnenseitig mit der Rohrinnenwand abschließen, was einfach und funktionssicher ist und darüber hinaus auch einfach spanabhebend gefertigt werden kann. Die Auslegung ist im ganzen z. B. so getroffen, daß zwischen der zur Rohrachse parallelen Rippenflanke 10 an der Dichtrippe 9 sowie der Nutflanke 12 an der Dichtnut 11 im zusammengeschraubten Zustand ein Federspalt für ein federndes Spiel frei ist. Das ist in den Figuren aus Maßstabsgründen nicht erkennbar. Andererseits kann die Anordnung auch so getroffen sein, daß die zur Rohrachse parallele Rippenflanke 10 an der Dichtrippe 9 sowie die zur Rohrachse parallele Nutflanke 12 an der Dichtnut 11 im zusammengeschraubten Zustand paß aufeinandersitzen. Die Stoßfläche 5 im Muffenrohrelement 3 sowie die Stirnfläche 6 am Bolzenrohrelement 1 mögen einschraubbegrenzend mitwirken. Die Einschraubbegrenzung erfolgt jedoch hauptsächlich durch die Dichtrippe 9 und die Dichtnut 11. Die Mitwirkung von Stoßfläche 5 und Stirnfläche 6 geschieht so, daß daraus störende Einflüsse nicht resultieren. Das läßt sich durch Bemessung der genannten Bauteile in axialer Richtung ohne weiteres sicherstellen. Es versteht sich, daß die Lage der genannten Bauteile derart auf das konische Gewinde 4 am Bolzenrohrelement 1 und am Muffenrohrelement 3 abgestimmt ist, daß unter dem Einfluß des Verschraubungsdrehmomentes die beschriebene Funktion eintritt. Das Bolzenrohrelement 1 weist im nichtzusammengeschraubten Zustand einen Innendurchmesser auf, der größer ist als das Muffenrohr element 3. Dazu wird auf Pfeil B in Fig. 3 verwiesen. Aus einer vergleichenden Betrachtung der Fig. 2 und 3 entnimmt man, daß das Bolzenrohrelement 1 im Bereich seiner Stirnfläche 6 und im Bereich der Dichtnut 11 im zusammengeschraubten Zustand auf den Innenradius des Muffenrohrelementes 3 zusammengedrückt ist, und zwar durch die Wechselwirkung des Dichtungsballens 7 mit dem Dichtungskegel 8. Dabei ist die parallele Nutflanke 12 an der Dichtnut 11 auf die parallele Rippenflanke 10 an der Dichtrippe 9 paß aufgesetzt. Die der Fig. 2 entsprechende Fig. 4 zeigt eine weitere Ausführungsform einer erfindungsgemäßen Rohrverbindung. Bei dieser Ausführungsformschließt an die gegenüber der Stoßfläche 5 vorspringende Dichtrippe 9 rohrinnenseitig eine Abschlußringfläche 13 an, die radial etwa mit der Stoßfläche 5 fluchtet. Die Dichtnut 11 ist entsprechend als eine Nut ausgeführt, in die die Dichtrippe 9 mit Radialspiel einfaßt und an die rohrinnenseitig eine Abschlußringgegenfläche 14 anschließt. die Abschlußringfläche 13 sowie die Abschlußringgegenfläche 14 können im zusammengeschraubten Zustand zur Einschraubbegrenzung beitragen. — Die Rippenkopffläche 15 bzw. die Nutengrundfläche 16 können auch profiliert sein.

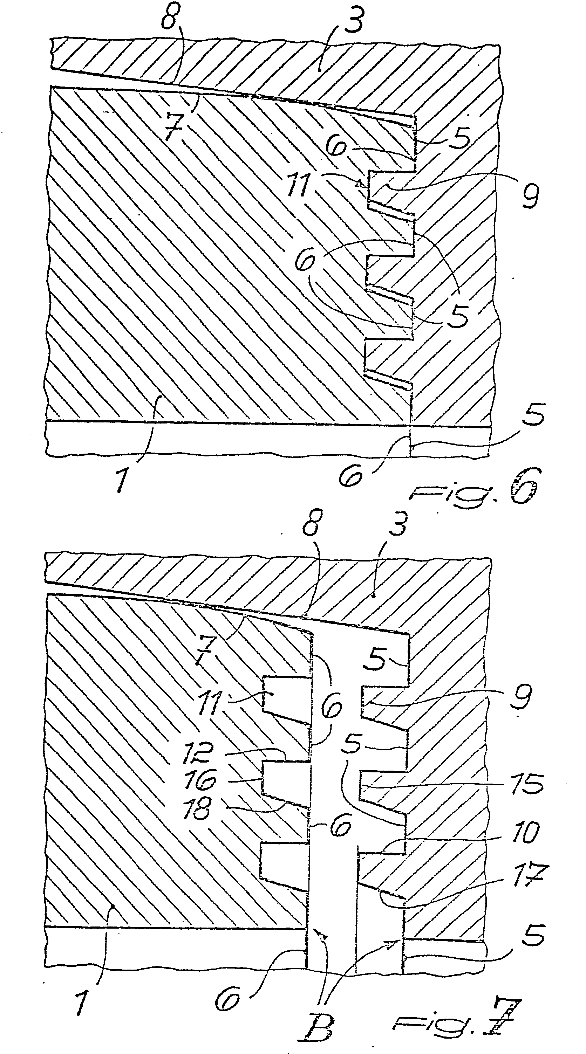

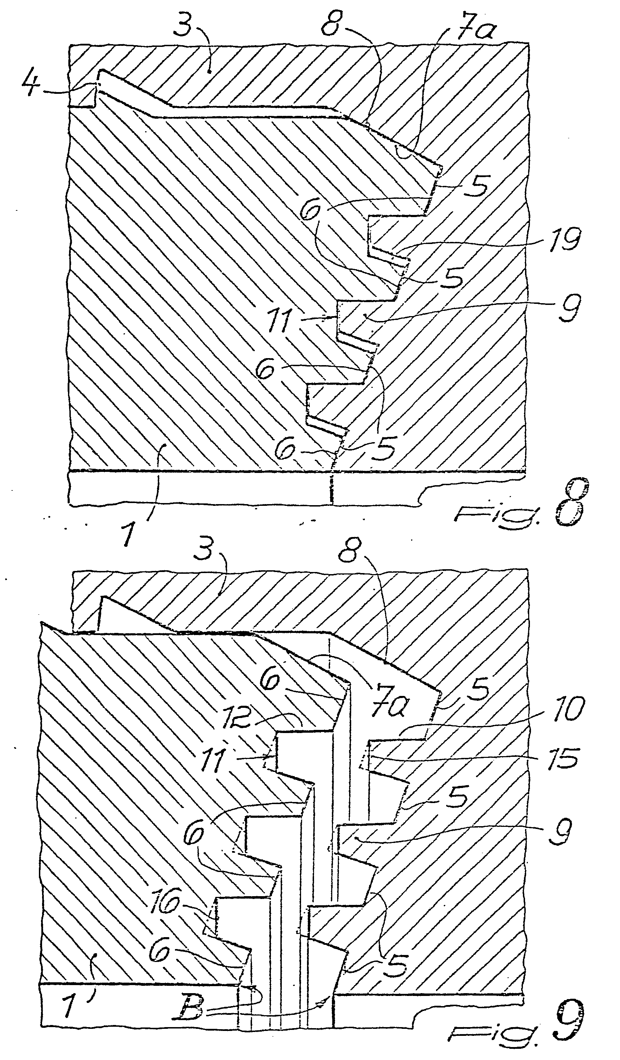

Bei der in den Fig. 5 bis 7 dargestellten Ausführungsform besteht die zusätzliche Dichtungsausbildung der Stoßfläche 5 aus einer Mehrzahl von aus der Stoßfläche 5 vorstehenden trapezförmigen Dichtrippen 9, die konzentrisch zur Rohrachse und konzentrisch zueinander verlaufen. Die Stirnfläche 6 besitzt umgekehrt eine Mehrzahl von eingearbeiteten, entsprechenden Dichtnuten 11, in die die Dichtrippen 9 im zusammengeschraubten Zustand einfassen. Dazu wird auf die Fig. 5 und 6 verwiesen. Im zusammengeschraubten Zustand sind die Stoßflächenbereiche 5 zwischen den Dichtrippen 9 sowie die Stirnflächenbereiche 6 zwischen den Dichtnuten 11 einschraubbegrenzend gegeneinandergepreßt. Die Dichtrippen 9 weisen Rippenkopfflächen 15 und die Dichtnuten 11 weisen Nutengrundflächen 16 auf, die im zusammengeschraubten Zustand ebenfalls gegeneinandergepreßt sind. Die Dichtrippen 9 besitzen, wie bereits erwähnt, ein im Radialschnitt trapezförmiges, zu den Dichtnuten 11 hin sich verjüngendes Querschnittsprofil. Die Dichtnuten 11 sind, unter Einbeziehung von erwünschtem Spiel, komplementär ausgebildet. Es versteht sich, daß die Kanten an den Dichtrippen 9 bzw. an den Dichtnuten 11 abgerundet sein können. Durch die Wechselwirkung der Dichtrippen 9 und der Dichtnuten 11 beim Zusammenschrauben Zustand wird eine definierte Dichtwirkung erreicht und lassen sich die inneren Kräfte steuern. Die Dichtrippen 9 besitzen auf ihre von der Rohrachse wegweisenden Außenseite eine zur Rohrachse parallele Rippenflanke 10, der eine entsprechende Nutflanke 12 in den Dichtnuten 11 zugeordnet ist. Die Dichtrippen 9 und die Dichtnuten 11 sind im zusammengeschraubten Zustand mit den Rippenkopfflächen 15 und den Nutengrundflächen 16, im übrigen aber lediglich mit einer ihrer Flanken gegeneinandergepreßt und zwar mit ihren zur Rohrachse parallelen Flanken 10, 12. Ob lediglich die zur Rohrachse parallelen Flanken 10, 12 oder lediglich die gegenüberliegenden 17, 18 neben den Rippenkopfflächen 15 und den Nutengrundflächen 16 im zusammengeschraubten Zustand gegeneinandergepreßt sind, kann auch in Abhängigkeit von der Gestaltung der Umfangsdichtungselemente 7, 8 eingerichtet werden. Immer läßt sich erreichen, daß die Stoßfläche 5 sowie die Stirnfläche 6 auch eine Zentrierung erfahren, weil die Dichtrippen 9 und entsprechend die Dichtnuten 11 in radialer Richtung eine Dicke besitzen, die ausreicht, um Zentrierkräfte aufzunehmen. In Fig. 7 erkennt man bei dem Pfeil B, daß der Innendurchmesser des Bolzenrohrelementes 1, welches einen Dichtungsballen 7 trägt, im Bereich seiner Stirnfläche 6 im unverschraubten Zustand größer ist als der des Muffenrohrelementes 3, welches einen Dichtungskegel 8 trägt. Im zusammengeschraubten Zustand schließen trotz dieses Durchmesserunterschiedes die Stoßfläche 5 sowie die Stirnfläche 6 rohrinnenseitig stufenfrei aneinander an. Die Dichtrippen 9 und die Dichtnuten 11 stellen den stufenfreien Übergang sicher. Ein übliches Übermaß des Dichtungsballens 7 gegenüber dem Dichtungskegel 8 wirkt. Jedenfalls erreicht man eine sichere Abdichtung unter Verzicht auf Weichdichtungen. Auch eine Aufspreizung des Bolzenrohrelementes 1 zum Zwecke einer plastischen Verformung einer äußeren, füre die Abdichtung vorgesehenen Bolzenrohrkante ist nicht mehr erforderlich. Das alles funktioniert auch bei den im Ölfeld üblichen Abmessungen, wo beispielsweise die radialen Erstreckungen der Stoßfläche 5 sowie der Stirnfläche 6 bei 5 mm liegen und die Dichtrippen 9 sowie die Dichtnuten 11 entsprechend kleiner sind.

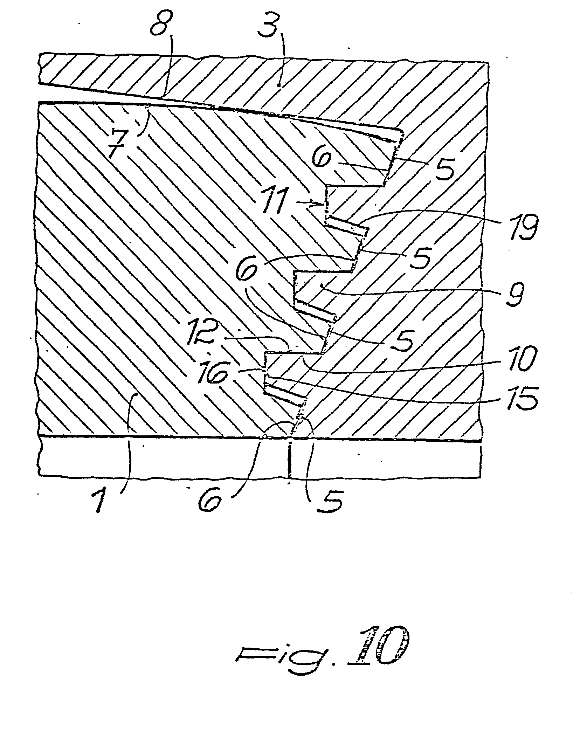

Bei der Ausführungsform nach den Fig. 8 bis 10 ist im Muffenrohrelement 3 eine nach außen flachkonisch zurückspringende Stoßfläche 5 angeordnet. Am Bolzenrohrelement 1 befindet sich eine entsprechende Stirnfläche 6. Innenseitig schließen an die Stoßfläche 5, außenseitig schließen an die Stirnfläche 6 in einem gewindefreien Bereich am Bolzenrohrelement 1 sowie im Muffenrohrelement 3 Umfangsdichtungselemente an. Bei der Ausführungsform nach den Fig. 8 und 9 handelt es sich bei den Umfangsdichtungselementen um einen steilkonisch nach außen vorspringenden Dichtungskegel 8 im Muffenrohrelement 3 und um einen zugeordneten Dichtungskegel 7a am Bolzenrohrelement 1. Bei der Ausführungsform nach der Fig. 10 ist das Umfangsdichtungselement am Bolzenrohrelement 1 ein Dichtungsballen 7, im Muffenrohrelement 3 wiederum ein Dichtungskegel 8. Die Stoßfläche 5 weist eine Mehrzahl von umlaufenden Dichtrippen 9 auf. Diesen sind Dichtnuten 11 in der Stirnfläche 6 zugeordnet. Die Dichtrippen 9 sind in die Dichtnuten 11 beim Zusammenschrauben mit radialer Verspannung einführbar. Die radiale Verspannung kann am Bolzenrohrelement 1 nach außen wirken, wie es in den Figuren dargestellt ist. Die Anordnung könnte jedoch, gleichsam durch Umkehrung der in den Figuren dargestellten Verhältnisse, an den Dichtrippen 9 und Dichtnuten 11 auch so getroffen sein, daß die radiale Verspannung am Bolzenrohrelement 1 nach innen wirkt. Im Ausführungsbeispiel und nach bevorzugter Ausführungsform der Erfindung weisen die Dichtrippen 9 sowie die Dichtnuten 11 einen im wesentlichen trapezförmigen Querschnitt auf, wobei jedoch im zusammengeschraubten Zustand Spalträume 19 freibleiben können. Die Anordnung ist im Ausführungsbeispiel fernerhin stets so getroffen, daß die Dichtrippen 9 und die Dichtnuten 11 durch Flankenkontakt an einer Rippenflanke 10 und an einer zugeordneten Nutflanke 12 beim Zusammenschrauben radial verspannbar sind und im zusammengeschraubten Zustand entsprechend radial verspannbar sind. Bei der Ausführungsform nach den Fig. 8 und 9 sind die Dichtrippen 9 mit ihrer von der Rohrachse wegweisenden Rippenflanke 10 und die Dichtnuten 11 mit einer zugeordneten, nach innen zur Rohrachse weisenden Nutflanke 12 radial verspannbar, so daß das Bolzenrohrelement 1 dadurch aufspreizbar ist. Bei Umkehrung erreicht man ein Zusammenpressen des Bolzenrohrelementes 1, was nicht gezeichnet wurde. Die Dichtrippen 9 besitzen Rippenkopfflächen 15, die in zusammengeschraubtem Zustand mit zugeordneten Nutengrundflächen 16 der Dichtnuten 11 zusammenpreßbar sind. Im Ausführungsbeispiel ist dabei die Anordnung so getroffen, daß die Rippenkopfflächen 15 zur Rohrachse orthogonal verlaufen, wobei die Nutengrundflächen 16 angepaßt sind. In Fig. 9 wurde strichpunktiert angedeutet, daß die Rippenkopfflächen 15 auch nach außen flachkonisch zurückspringend ausgebildet sein können, wobei dann wiederum die Nutengrundflächen 16 angepaßt sind. Im Rahmen der Erfindung liegt es, die Anordnung so zu treffen, daß alle Flanken der Dichtrippen 9 und der Dichtnuten 11 und außerdem die Rippenkopfflächen 15 und die Nutengrundflächen 16 gegeneinandergepreßt sind. Gerade bei dieser Ausführungsform kann für die Dichtrippen 9 und Dichtnuten 11 die Geometrie der Verhältnisse so gewählt werden, daß entsprechende Dichtkräfte Metall auf Metall an all diesen Flächen entstehen.

Von besonderer Bedeutung ist die Ausführungsform nach der Fig. 10. Hier sind die Umfangsdichtungselemente im Muffenrohrelement 3 als Dichtungskegel 8, am Bolzenrohrelement 1 als Dichtungsballen 7 ausgeführt. Die Dichtrippen 9 besitzen auf ihrer von der Rohrachse wegweisenden Seite eine zur Rohrachse parallele Rippenflanke 10. Die Dichtnuten 11 besitzen eine entsprechende Nutflanke 12. Die radiale Verspannung im zusammengeschraubten Zustand wird durch Aufsetzen der parallelen Flanken 10, 12 aufeinander herbeigeführt. Dazu trägt bei, daß der Dichtungsballen 7 gegenüber dem Dichtungskegel 8 « Übermaß » aufweist und folglich durch den Dichtungskegel 8 nach innen zusammengedrückt wird, ehe die beschriebene Reaktion der Dichtrippen 9 und Dichtnuten 11 erfolgt. Auf diese Weise läßt sich auch sicherstellen, daß die Innendurchmesser von Bolzenrohrelement 1 und Muffenrohrelement 3, die im nichtzusammengeschraubten Zustand nicht übereinstimmen, im zusammengeschraubten Zustand genau und stufenfrei ineinander übergehen, was aus hydrodynamischen Gründen häufig verlangt wird.

**Patentansprüche**

1. Rohrverbindung für Metallrohre, insbesondere Ölfeldrohre, mit Bolzenrohrelement (1) und Muffenrohrelement (3), die mit konischem Gewinde (4) verschraubbar sind und eine einschraubbegrenzende Stoßfläche (5) im Muffenrohrelement (3) sowie eine entsprechende Stirnfläche (6) am Bolzenrohrelement (1) aufweisen, wobei das Muffenrohrelement (3) in einem gewindefreien, an seine Stoßfläche (5) anschließenden Bereich einen angeformten Dichtungskegel (8) und das Bolzenrohrelement (1) in einem gewindefreien, an seine Stirnfläche (6) anschließenden Bereich ein Gegendichtungselement (7) aufweist, dadurch gekennzeichnet, daß die Stoßfläche (5) des Muffenrohrelementes (3) zumindest eine vorstehende und umlaufende Dichtrippe (9) aufweist, die zumindest eine zur Rohrachse parallele Rippenflanke (10) sowie eine ebene Rippenkopffläche (15) besitzt, daß entsprechend die Stirnfläche (6) des Bolzenrohrelementes (1) mit zumindest einer Dichtnut (11) versehen ist, die eine der parallelen Rippenflanke (10) der Dichtrippe (9) zugeordnete Nutflanke (12) sowie eine der Rippenkopffläche (15) zugeordnete Nutengrundfläche (16) aufweist, und daß die Rippenkopffläche (15) sowie die Nutengrundfläche (16) im zusammengeschraubten Zustand aufeinandergepreßt sind, und die zur Rohrachse parallele Rippenflanke (10) sowie die zugeordnete Nutflanke (12) zumindest mit Dichtungsspalt einander gegenüberliegend angeordnet sind.

2. Rohrverbindung nach Anspruch 1 in der Ausführungsform mit einer einzigen Dichtrippe und einer einzigen Dichtnut, dadurch gekennzeichnet, daß die Dichtrippe (9) des Muffenrohrelementes (3) rohrinnenseitig angeordnet und zugleich als Einschraubbegrenzungsbund ausgebildet ist, der auf seiner von der Rohrachse wegweisenden Außenseite die zur Rohrachse parallele Rippenflanke (10) sowie die zur Rohrachse orthogonale Rippenkopffläche (15) aufweist, und daß die Rippenkopffläche (15) als Anschlagfläche sowie die entsprechende Nutengrundfläche (16) des Bolzenrohrelementes (1) als Anschlaggegenfläche für die Einschraubbegrenzung ausgelegt sind (Fig. 1 bis 4).

3. Rohrverbindung nach Anspruch 2, dadurch gekennzeichnet, daß die als Einschraubbegrenzungsbund eingesetzte Dichtrippe (9) sowie die Dichtnut (11), die die Dichtrippe (9) aufnimmt, rohrinnenseitig mit der Rohrinnenwand abschließen.

4. Rohrverbindung nach Anspruch 2, dadurch gekennzeichnet, daß an der gegenüber der Stoßfläche (5) vorspringenden Dichtrippe (9) rohrinnenseitig eine Abschlußringfläche (13) anschließt, die radial etwa mit der Stoßfläche (5) fluchtet, und daß die Dichtnut (11) als eine Nut ausgeführt ist, in die die Dichtrippe (9) mit Radialspiel einfaßt und an die rohrinnenseitig eine Abschlußringgegenfläche (14) anschließt.

5. Rohrverbindung nach einem der Ansprüche 2 bis 4, dadurch gekennzeichnet, daß die an die Dichtrippe (9) des Muffenrohrelementes (3) rohraußenseitig angeschlossene Stoßfläche (5) orthogonal zur Rohrachse angeordnet ist, daß an die entsprechende Stirnfläche (6) des Bolzenrohrelementes (1) als Gegendichtungselement ein Dichtungsballen (7) angeschlossen ist, der im eingeschraubten Zustand an den Dichtungskegel (8) angepreßt ist, und daß im eingeschraubten Zustand die Stirnfläche (6) des Bolzenrohrelementes (1) die Stoßfläche (5) im Muffenrohrelement (3) lediglich berührt.

6. Rohrverbindung nach Anspruch 1 in der Ausführungsform mit mehreren Dichtrippen und mehreren Dichtnuten, dadurch gekennzeichnet, daß die aus der Stoßfläche (5) des Muffenrohrelementes (3) vorstehenden Dichtrippen (9) im Radialschnitt trapezförmigen Querschnitt aufweisen und konzentrisch zur Rohrachse sowie zueinander verlaufen, und daß im zusammengeschraubten Zustand die Dichtrippen (9) in die Dichtnuten (11) der Stirnfläche (6) des Bolzenrohrelementes (1), bei einschraubbegrenzender Anlage der Stoßfläche (5) an der Stirnfläche (6), mit dichtender Anlage der zur Rohrachse parallelen Rippenflanke (10) an der entsprechenden Nutenflanke (12) einfassen sowie die Rippenkopfflächen (15) an den Nutengrundflächen (16) dichtend anliegen.

7. Rohrverbindung nach Anspruch 6, dadurch gekennzeichnet, daß die Dichtrippen (9) und die Dichtnuten (11) im zusammengeschraubten Zustand mit ihren, den zur Rohrachse parallelen Flanken (10, 12) gegenüberliegenden Flanken (17, 18) gegeneinandergepreßt sind.

8. Rohrverbindung nach einem der Ansprüche 6 oder 7, dadurch gekennzeichnet, daß das Muffenrohrelement (3) rohraußenseitig hinter der letzten Dichtrippe (9) einen äußeren Stoßflächenbereich aufweist, der gegenüber der Rippenkopffläche (15) zurückspringt und an den der Dichtungskegel (8) anschließt, und daß das Bolzenrohrelement (1) rohraußenseitig hinter der letzten Dichnut (11) einen gegenüber der Nutengrundfläche (16) vorspringenden Stirnflächenbereich aufweist, an den rohraußenseitig ein als Dichtungsballen (7) ausgeführtes Gegendichtungselement anschließt, welches dem Dichtungskegel (8) zugeordnet ist, wobei die Stoßfläche (5) und die Stirnfläche (6) orthogonal zur Rohrachse verlaufen (Fig. 5 bis 7).

9. Rohrverbindung nach einem der Ansprüche 6 oder 7, dadurch gekennzeichnet, daß die Rippenkopfflächen (15) der Dichtrippen (9) an der Stoßfläche (5) des Muffenrohrelementes (3) sowie die Nutengrundflächen (16) in den Dichtnuten (11) in der Stirnfläche (6) des Bolzenrohrelementes (1) orthogonal zur Rohrachse verlaufen, daß die Stoßfläche (5) im Muffenrohrelement (3) nach außen flachkonisch zurückspringt sowie die Stirnfläche (6) am Bolzenrohrelement (1) entsprechend nach außen vorspringend angeordnet ist (Fig. 8 und 9).

10. Rohrverbindung nach Anspruch 9, dadurch gekennzeichnet, daß das Muffenrohrelement (3) rohraußenseitig hinter der letzten Dichtrippe (9) einen äußeren Stoßflächenbereich aufweist, der gegenüber der Rippenkopffläche (15) flachkonisch zurückspringt und an den der Dichtungskegel (8) anschließt, und daß das Bolzenrohrelement (1) rohraußenseitig hinter der letzten Dichtnut (11) einen gegenüber dem Nutengrund konisch vorspringenden Stirnflächenbereich aufweist, an den rohraußenseitig ein ebenfalls als Dichtungskegel (7a) angeformtes Gegendichtungselement anschließt.

11. Rohrverbindung nach Anspruch 6, dadurch gekennzeichnet, daß die Rippenkopfflächen (15) an den Dichtrippen (9) der Stoßfläche (5) des Muffenrohrelementes (3) sowie die Nutengrundflächen (16) in den Dichtnuten (11) in der Stirnfläche (6) des Bolzenrohrelementes (1) entsprechend der flachkonisch zurückspringenden Stoßfläche (5), ebenso wie die Stirnfläche (6), schräg zur Rohrachse verlaufen.

12. Rohrverbindung nach einem der Ansprüche 9 oder 11, dadurch gekennzeichnet, daß das Bolzenrohrelement (1) als Gegendichtungselement einen Dichtungsballen (7) aufweist (Fig. 10).

**Claims**

1. A tube connection for metallic tubes, particularly oilfield tubes, — with an externally-threaded tube unit (1) and a socket tube unit (3) that can be screwed together by conical threads (4) and possess an abutment surface (5) in the socket tube unit (3), limiting the extent of screwing together, and also a corresponding frontal surface (6) on the externally-threaded tube unit (1), in which the socket tube unit (3) possesses a formed-on sealing cone (8) in an area that is free from threads and is adjacent to its abutment surface (5), and the externally-threaded tube unit (1) possesses a counterseal unit (7) in an area that is free from threads and is adjacent to its frontal surface (6), characterized in that the abutment surface (5) of the socket tube unit (3) possesses at least one projecting circumferential sealing rib (9) which possesses at least one rib flank (10) parallel to the axis of the tube and also possesses a plane rib upper surface (15) ; that in corresponding manner the frontal surface (6) of the externally-threaded tube unit (1) is provided with at least one sealing groove (11) which possesses a groove flank (12) associated with the parallel rib flank (10) of the sealing rib (9) and also a groove base surface (16) associated with the rib upper surface (15) ; and that in the screwed-together condition the rib upper surface (15) and the groove base surface (16) are pressed against one another, and also a rib flank (10) and the associated groove flank (12) are, at least with a sealing gap, located opposite to one another.

2. A tube connection according to Claim 1 in the form of construction with a single sealing rib and a single sealing groove, characterized in that the sealing rib (9) on the socket tube unit (3) is located on the inside of the tube and is additionally formed as a collar limiting the extend of screwing together, possessing the rib flank (10) parallel to the axis of the tube on its outer side facing away from the axis of the tube and a rib upper surface (15) orthogonal to the axis of the tube ; and that the rib upper surface (15) is designed as impact surface and the corresponding groove base surface (16) of externally-threaded tube unit (1) as impact counter-surface to limit the extent of screwing together (Figures 1 to 4).

3. A tube connection according to Claim 2, characterized in that the sealing rib (9) used as a collar limiting the extent of screwing together, and also the sealing groove (11) which accepts the sealing rib (9) terminate inside the tube level with the inner tube wall.

4. A tube connection according to Claim 2, characterized in that on the inside of the tube compared with the sealing rib (9) that projects from the abutment surface (5) a shroud ring surface (13) is added, which is radially approximately aligned with the abutment surface (5), and that the sealing groove (11) is constructed as a groove into which the sealing rib (9) enters with radial play and to which a shroud ring counter-surface (14) is added towards the inner surface of the tube that can contribute to limitation of the extent of screwing together.

5. A tube connection according to one of Claims 2 to 4, characterized in that the abutment surface (5) attached to the sealing rib (9) of the socket tube unit towards the outside of the tube is located orthogonally to the axis of the tube ; that a sealing convexity (7) is attached to the corresponding frontal surface of externally-threaded tube unit (1) as a counterseal unit that is pressed against the sealing cone (8) in the screwed-together condition ; and that in the screwed-together condition the frontal surface (6) of the externally-threaded tube unit (1) merely touches the abutment surface (5) of the socket tube unit (3).

6. A tube connection according to Claim 1 in the form of construction with several sealing ribs and several sealing grooves, characterized in that the sealing ribs (9) that project from the abutment surface (5) of the socket tube unit (3) possesses trapezium-shaped radial cross-section and extend concentrically to the tube axis and to one another, and that in the screwed-together condition the sealing ribs (9) fit tightly in the sealing grooves (11) of the frontal surface (6) of the externally-threaded tube unit (1) with contact between the abutment surface (5) and the frontal surface (6) limiting the extent of screwing together, with tight contact between the rib flanks (10) parallel to the tube axis and the corresponding groove flanks (12), and with tight contact between the rib upper surfaces (15) and the groove base surfaces (16).

7. A tube connection according to Claim 6 in the screwed-together condition, characterized in that the sealing ribs (9) and sealing grooves (11) are pressed against one another to the flanks (10, 12) that are parallel to the tube axis.

8. A tube connection according to one of Claims 6 or 7, characterized in that the socket tube unit (3) possesses an other abutment surface area beyond the last sealing rib (9) towards the outside of the tube, recessed compared with the rib upper surface (15) and to which the sealing cone (8) is connected, and that the externally-threaded tube unit (1) possesses a frontal surface area beyond the last sealing groove (11) towards the outside of the tube, projecting forwards compared with the groove base surface (16), to which is connected on the outside of the tube a counterseal unit formed as a sealing convexity (7) that is associated with the sealing cone (8), the abutment surface (5) and the frontal surface (6) running orthogonally to the axis of the tube (Figures 5 to 7).

9. A tube connection according to one of Claims 6 or 7, characterized in that the rib upper surfaces (15) of the sealing ribs (9) on the abutment surface (5) of the socket tube unit (3) and also the groove base surfaces (16) of the sealing grooves (11) in the frontal surface (6) of the externally-threaded tube unit (1) run orthogonally to the axis of the tube ; that the abutment surface (5) of the socket tube unit (3) is recessed towards the outside as a shallow cone and the frontal surface (6) of the externally-threaded tube unit is correspondingly arranged to project forward towards the outside (Figures 8 and 9).

10. A tube connection according to Claim 9, characterized in that the socket tube unit (3) posseses an outer abutment surface area beyond the last sealing rib (9) towards the outside of the tube recessed as a shallow cone compared with the rib upper surface (15) and to which the sealing cone (8) is connected, and that the externally-threaded tube unit (1) possesses a frontal surface area beyond the last sealing groove (11) towards the outside of the tube, projecting forwards conically compared with the groove base, to which is connected at the outside of the tube a counterseal unit that is likewise formed on as a sealing cone (7a).

11. A tube connection according to Claim 6, characterized in that the rib upper surfaces (15) of the sealing ribs (9) of the abutment surface (5) of the socket tube unit (3) and also the groove base surfaces (16) of the sealing grooves (11) in the frontal surface (6) of the externally threaded tube unit run obliquely to the axis of the tube in similar manner to the abutment surface (5) that is recessed as a shallow cone and in the same way as the frontal surface (6).

12. A tube connection according to one of Claims 9 or 11, characterized in that the externally-threaded tube unit (1) possesses a sealing convexity (7) as counter-seal unit (Figure 10).

## Revendications

1. Raccord à tubes pour des tubes métalliques, en particulier des tubes pétrolifères, comprenant un élément boulon du tuyau (1) et un élément manchon du tuyau (3) qui peuvent être vissés avec un filetage conique (4) et qui présentent une surface d'about (5) dans l'élément manchon du tuyau (3) pour la limitation du vissage ainsi qu'une surface frontale (6) correspondante sur l'élément boulon du tuyau (1), l'élément manchon du tuyau (3) comprenant, dans une section non filetée faisant suite à sa surface d'about (5), un cône d'étanchéité (8) formé et l'élément boulon du tuyau (1) étant muni, dans une zone non filetée faisant suite à sa surface frontale (6), d'un élément d'étanchéité conjugué (7) caractérisé par le fait que la surface d'about (5) de l'élément manchon du tuyau (3) présente au moins une nervure d'étanchéité (9) circulaire en saillie avec au moins un flanc de nervure (10) parallèle à l'axe du tuyau ainsi qu'avec un sommet de nervure (15) plan ; que la surface frontale (6) de l'élément boulon du tuyau (1) est munie, par analogie, d'au moins une rainure d'étanchéité (11) avec un flanc de rainure (12) associé au flanc de nervure parallèle (10) de la nervure d'étanchéité (9) ainsi qu'avec un fond de rainure (16) associé au sommet de nervure (15) ; que, à l'état vissé, le sommet de nervure (15) ainsi que le fond de rainure (16) sont appliqués l'un contre l'autre et qu'un flanc de nervure (10) parallèle à l'axe du tuyau et le flanc de rainure (12) correspondant se trouvent disposés face à face avec au moins une fente d'étanchéité.

2. Raccord à tubes selon la revendication 1 dans le mode de réalisation avec une seule nervure d'étanchéité et une seule rainure d'étanchéité, caractérisé par le fait que la nervure d'étanchéité (9) de l'élément manchon du tuyau (3) est disposée à l'intérieur du tube et conformée en même temps en tant qu'épaulement de limitation de vissage lequel présente, à sa face extérieure opposée à l'axe du tuyau, le flanc de nervure (10) parallèle à l'axe du tuyau ainsi qu'au sommet de nervure (15) orthogonal à l'axe du tuyau, et que le sommet de nervure (15) est conformé en tant que surface d'arrêt et le fond de rainure conjugué (16) de l'élément boulon du tuyau (1) en tant que surface d'arrêt opposée pour la limitation du vissage (fig. 1 à 4).

3. Raccord à tubes selon la revendication 2, caractérisé par le fait que la nervure d'étanchéité (9) utilisée comme épaulement de limitation de vissage ainsi que la rainure d'étanchéité (11) recevant la nervure d'étanchéité (9) s'alignent, à l'intérieur du tuyau, avec la paroi intérieure du tuyau.

4. Raccord à tubes selon la revendication 2, caractérisé par le fait qu'à la nervure d'étanchéité (9) en saillie en face de la surface d'about (5) fait suite, à l'intérieur du tuyau, une surface annulaire terminale (13) qui s'aligne approximativement, dans le sens radial, avec la surface d'about (5), et que la rainure d'étanchéité (11) est réalisée sous la forme d'une gorge dans laquelle la nervure d'étanchéité (9) s'engage avec jeu radial et à laquelle fait suite, à l'intérieur du tuyau, une surface annulaire terminale opposée (14) qui peut contribuer à la limitation du vissage.

5. Raccord à tubes selon l'une quelconque des revendications 2 à 4, caractérisé par le fait que la surface d'about (5) rattachée du côté extérieur du tuyau à la nervure d'étanchéité (9) de l'élément manchon du tuyau (3) est disposée orthogonalement par rapport à l'axe du tuyau, qu'à la face frontale (6) correspondante de l'élément boulon du tuyau (1) fait suite un bombement d'étanchéité (7) en tant qu'élément d'étanchéité qui, à l'état vissé, est pressé contre le cône d'étanchéité (8), et que, à l'état vissé, la face frontale (6) de l'élément boulon du tuyau (1) touche seulement la surface d'about (5) de l'élément manchon du tuyau.

6. Raccord à tubes selon la revendication 1 dans le mode de réalisation comportant plusieurs nervures et plusieurs rainures d'étanchéité, caractérisé par le fait que les nervures d'étanchéité (9) dépassant de la surface d'about (5) de l'élément manchon du tuyau (3) présentent, en coupe radiale, une section trapézoïdale et s'étendent concentriquement par rapport à l'axe du tuyau ainsi que les unes par rapport aux autres, et que, à l'état vissé, les nervures d'étanchéité (9) s'engagent dans les rainures d'étanchéité (11) de la face frontale (6) de l'élément boulon du tuyau (1), avec application de la surface d'about (5) contre la face frontale (6) pour la limitation du vissage, application étanche du flanc de nervure (10) parallèle à l'axe du tuyau contre le flanc de rainure (12) correspondant et avec application étanche des sommets de nervures (15) contre les fonds de rainures (16).

7. Raccord à tubes selon la revendication 6, caractérisé par le fait que, à l'état vissé, les nervures d'étanchéité (9) et les rainures d'étanchéité (11) sont pressées les unes contre les autres avec leurs flancs (17, 18) opposés aux flancs (10, 12) parallèles à l'axe du tuyau.

8. Raccord à tubes selon l'une des revendications 6 ou 7, caractérisé par le fait que l'élément manchon du tuyau présente, du côté extérieur du tuyau, derrière la dernière nervure d'étanchéité (9), une zone de surface d'about extérieure qui est en retrait par rapport au sommet de nervure (15) et à laquelle se rattache le cône d'étanchéité (8), et que l'élément boulon du tuyau (1) comporte, du côté extérieur du tuyau, derrière la dernière rainure d'étanchéité (11), une zone de face frontale en saillie par rapport au fond de rainure (16) à laquelle se rattache, du côté extérieur du tuyau, un élément d'étanchéité conjugué réalisé sous la forme d'un bombement d'étanchéité (7) et associé au cône d'étanchéité (8), la surface d'about (5) et la face frontale (6) s'étendant orthogonalement par rapport à l'axe du tuyau (fig. 5 à 7).

9. Raccord à tubes selon l'une des revendications 6 ou 7, caractérisé par le fait que les sommets de nervures (15) des nervures d'étanchéité (9) sur la surface d'about (5) de l'élément manchon du tuyau (3) ainsi que les fonds de rainures (16) des rainures d'étanchéité (11) dans la face frontale (6) de l'élément boulon du tuyau (1) s'étendent orthogonalement par rapport à l'axe du tuyau, que la surface d'about (5) de l'élément manchon du tuyau (3) est en retrait vers l'extérieur de façon conique plate et que la face frontale (6) sur l'élément boulon du tuyau (1) dépasse de manière analogue vers l'extérieur (fig. 8 et 9).

10. Raccord à tubes selon la revendication 9, caractérisé par le fait que l'élément manchon du tuyau (3) présente, à l'extérieur du tuyau, derrière la dernière nervure d'étanchéité (9), une zone de surface d'about extérieure qui est en retrait de manière conique plate par rapport au sommet de nervure (15) et à laquelle fait suite le cône d'étanchéité (8), et que l'élément boulon du tuyau (1) comporte, du côté extérieur du tuyau, derrière la dernière rainure d'étanchéité (11) une zone de face frontale dépassant coniquement par rapport au fond de rainure et à laquelle fait suite, du côté extérieur du tuyau, un élément d'étanchéité conforme également en tant que cône d'étanchéité (7a).

11. Raccord à tubes selon la revendication 6, caractérisé par le fait que les sommets de nervures (15) des nervures d'étanchéité (9) de la surface d'about (5) de l'élément manchon du tuyau (3) ainsi que les fonds de rainures (16) des rainures d'étanchéité (11) dans la face frontale (6) de l'élément boulon du tuyau (1) s'étendent en biais par rapport à l'axe du tuyau, conformément à la surface d'about (5) en retrait de façon conique plate ainsi qu'à la face frontale (6).

12. Raccord à tubes selon l'une des revendications 9 ou 11, caractérisé par le fait que l'élément boulon du tuyau (1) comporte comme élément d'étanchéité opposé un bombement d'étanchéité (7) (fig. 10).

Fig. 1

Fig. 2

Fig. 3

Fig. 4

Fig. 5

Fig. 6

Fig. 7

Fig. 8

Fig. 9

Fig. 10